Europäisches Patentamt

(19) European Patent Office

Office européen des brevets

(11) Numéro de publication : **0 098 200**
**B1**

(12) # FASCICULE DE BREVET EUROPÉEN

(45) Date de publication du fascicule du brevet :
17.05.89

(51) Int. Cl.⁴ : **G 06 F 15/40**, G 06 F 15/60

(21) Numéro de dépôt : 83401249.4

(22) Date de dépôt : 16.06.83

(54) **Procédé d'échange, de chargement et de consultation d'informations et circuit de commutation entre un terminal et une banque d'informations.**

(30) Priorité : 17.06.82 FR 8210629

(43) Date de publication de la demande :
11.01.84 Bulletin 84/02

(45) Mention de la délivrance du brevet :
17.05.89 Bulletin 89/20

(84) Etats contractants désignés :
AT BE CH DE GB IT LI LU NL SE

(56) Documents cités :
GB-A- 2 024 561
US-A- 3 611 301
SYSTEMS-COMPUTERS-CONTROLS, vol. 11, no. 1,
janvier-février 1980, pages 10-17, Scripta Publishing
Co., Silver Spring, USA

(73) Titulaire : Perrot, Laurence
18 rue Valentin Haüy
F-75007 Paris (FR)

GIROD DE L'AIN Malo
61 Boulevard Sébastopol
F-75001 Paris (FR)

Drubay, Fernand
7 avenue de la Tranquillité
F-78000 Versailles (FR)

(72) Inventeur : Perrot, Laurence
18 rue Valentin Haüy
F-75007 Paris (FR)
Inventeur : GIROD DE L'AIN Malo
61 Boulevard Sébastopol
F-75001 Paris (FR)
Inventeur : Drubay, Fernand
7 avenue de la Tranquillité
F-78000 Versailles (FR)

(74) Mandataire : Arnaud, Jean Pierre Alfred
Cabinet Arnaud 94 rue Saint-Lazare
F-75009 Paris (FR)

## Description

La présente invention concerne un procédé d'échange, de chargement et de consultation d'informations, entre un terminal comprenant au moins deux périphériques, fonctionnant avec des formats différents, et une banque d'informations ayant au moins une base de données et une banque de données dont les données ont au moins deux formats différents, des données de la base ou de la banque étant associées à d'autres données de la banque ou de la base respectivement. L'invention concerne aussi un circuit de commutation et d'adaptation destiné à la mise en œuvre d'un tel procédé.

L'utilisation des banques de données et des bases de données est de plus en plus courante dans la vie moderne. En général, un utilisateur, disposant d'un terminal, n'a accès qu'à une seule base ou banque de données ou, sélectivement, à plusieurs bases ou banques de données dont toutes les données sont en un format compatible avec les caractéristiques du terminal.

L'article de H. Nakagawa, de « Systems-Computer-Control » vol. 11, nº 1, janvier, février 1980, pages 10 à 17, décrit un système de consultation de bases de données d'images ne transmettant les images que de la base vers l'utilisateur et nécessitant un circuit spécialisé d'interface dans l'équipement de l'utilisateur.

L'invention concerne l'extension des possibilités d'exploitation des banques d'informations, cette extension portant d'une part sur la nature des banques d'informations utilisables et d'autre part sur le nombre d'utilisateurs concernés.

L'extension portant sur la nature des banques d'informations concernées est obtenue par mise en œuvre de « banques d'informations » comprenant au moins une base de données et une banque de données ayant des formats différents. Plus précisément, les banques d'informations actuellement utilisées comprennent des données conservées en un seul format. Il est cependant parfois très utile de disposer de données sous des formats différents. Les banques d'informations mises en œuvre selon l'invention comportent au moins une base de données et une banque de données en formats différents, des données de la base étant reliées à des données de la banque. Par exemple, au cours d'une consultation, à la suite des données transmises par la base de données, des données provenant d'une banque de données, en format différent, sont appelées et l'utilisateur reçoit ainsi une réponse en deux formats différents, sur deux périphériques différents.

Il faut noter que, dans le présent mémoire, le terme « format » caractérise le codage des informations. Ainsi, l'expression « format caractères » désigne un code de caractères, et l'expression « format libre » désigne un code de données formé par exemple de segments de chaînes de bits représentatives de données graphiques ou de leur analyse. En outre, l'expression « base de données » désigne de façon classique un ensemble de données apparentées excluant les répétitions de données, alors que l'expression « banque de données » désigne un rassemblement cohérent de fichiers apparentés. L'expression « banque d'informations » s'applique à un ensemble comprenant au moins une base de données et une banque de données, les données de la base et de la banque étant mises à la disposition de plusieurs utilisateurs qui peuvent les exploiter en fonction de leurs besoins propres. La banque d'informations comporte en outre un circuit de gestion permettant diverses opérations, notamment la commutation entre la base de données et la banque de données lorsque la consultation le nécessite.

La seconde extension rendue possible par l'invention est l'augmentation du nombre d'utilisateurs. En effet, les périphériques des terminaux de consultation sont en général coûteux. Les moins coûteux sont les périphériques du type écran-clavier, les périphériques de type graphique étant au contraire très onéreux. Selon l'invention, l'association d'un périphérique du type écran-clavier de faible coût, par exemple du type terminal-annuaire, avec un télécopieur de groupe III permet la formation d'un terminal ayant à la fois les possibilités d'un visuel et d'un terminal graphique et n'utilisant que des éléments industriellement développés à grande échelle et dont le coût peut être faible. L'association des deux périphériques dans le terminal ne nécessite aucune modification selon l'invention. Un organe supplémentaire, par exemple un combiné téléphonique, est avantageusement associé aux deux périphériques.

Il faut donc noter que, dans le présent mémoire, le terme « terminal » s'applique à un ensemble de plusieurs périphériques, et le terme « périphérique » s'applique à un appareil susceptible d'être connecté à une banque d'informations.

Selon l'invention, toutes les opérations d'adaptation qui sont nécessaires à cause de l'utilisation de formats différents d'une part entre la base et la banque de données et d'autre part entre les périphériques, sont assurées par un circuit unique connecté d'une part au réseau commuté ou à une ligne spécialisée, de manière qu'il permette des échanges avec des terminaux à distance, et d'autre part à des accès d'une banque d'informations.

Selon l'invention, un circuit de commutation et d'adaptation assure la commutation entre la base et la banque de données lorsque le contenu des informations échangées le nécessite, et il assure l'adaptation aux différents formats de la base et de la banque de données et des périphériques.

Plus précisément, l'invention concerne un procédé d'échange, de chargement et de consultation d'informations entre un terminal comprenant au moins deux périphériques fonctionnant avec des formats différents, et une banque d'informations ayant au moins une base de données et une banque de données travaillant avec au moins deux formats différents, des données de la base étant associées à des données de la banque en formats différents, ledit procédé comprenant :

l'établissement d'une communication entre le terminal et la banque d'informations par une seule ligne de transmission de données, par connexion d'un premier périphérique à la base de données ou la banque de données, les données contenues dans cette base ou cette banque ayant un premier format,

l'échange de données entre cette base ou cette banque et le premier périphérique,

la connexion de la banque ou de la base de données respectivement à la ligne de transmission à la place de la base ou de la banque de données respectivement, la banque ou la base de données respectivement contenant des données ayant un second format différent du premier,

la connexion d'un second périphérique à la ligne de transmission, à la place du premier périphérique, le second périphérique étant destiné à échanger des données ayant le second format,

l'adaptation des modalités d'échange de données ayant le second format entre la banque ou la base de données respectivement et le second périphérique,

l'échange de données entre la banque ou la base de données respectivement et le second périphérique, et

la libération de la ligne de transmission de données.

Il est avantageux que la base de données soit connectée d'abord au premier périphérique et permette un échange de données qui comprend la transmission d'un menu par cette base de données qui transmet ensuite d'autres données ou non puis commande directement l'accès à la banque de données.

La connexion de la banque ou de la base de données à la place de la base ou de la banque de données est de préférence effectuée automatiquement par la banque d'informations à la fin de l'échange de données entre la base ou la banque de données et le premier périphérique.

L'adaptation des modalités d'échange comprend avantageusement la détermination de la résolution, du format du document, etc.

Il est très avantageux que le premier périphérique soit du type visuel, par exemple du type « terminal annuaire », et que le second périphérique soit d'un type formant une épreuve, de préférence un téléimprimeur, par exemple un télécopieur de groupe III ou « grande diffusion ».

Il est avantageux que certaines opérations soient exécutées par un opérateur. Ainsi, l'établissement de la communication est normalement exécuté par un opérateur. Celui-ci peut en outre assurer la connexion du second périphérique à la place du premier après que la banque d'informations a basculé de la base ou de la banque de données à la banque ou la base de données respectivement. En outre, il est souhaitable qu'un opérateur disposant par exemple d'un combiné téléphonique, contrôle l'établissement de la communication, puis l'exécution des opérations de connexion de la banque ou de la base de données à la place de la base ou de la banque de données respectivement, ces dernières opérations étant détectées par des tonalités convenables en ligne.

L'invention concerne aussi un circuit de commutation et d'adaptation destiné à être associé à une banque d'informations comprenant au moins une base de données et une banque de données ayant des formats différents, ce circuit comprenant :

un commutateur ayant une voie d'entrée et au moins deux voies de sortie, le commutateur étant rappelé dans la position dans laquelle la voie d'entrée est connectée à une première voie de sortie lorsqu'il est à l'état de repos,

un organe de commande du commutateur, et un circuit d'adaptation des modalités d'échange de données, monté dans une seconde voie de sortie,

la voie d'entrée étant destinée à être reliée à une ligne unique de transmission, et les voies de sortie étant destinées à être reliées à des accès différents de la banque d'informations, les données transmises par les accès à la banque d'informations ayant des formats différents.

Il est avantageux que la première voie de sortie, correspondant par exemple à l'échange de données avec un visuel, comporte un modulateur-démodulateur, l'organe de commande du commutateur étant alors commandé par des signaux transmis par l'une au moins des voies de sortie.

Il est avantageux que le circuit d'adaptation comporte un modulateur-démodulateur, adapté à la transmission par exemple de données à un télécopieur, et un circuit destiné à dialoguer avec un périphérique à distance, par exemple un télécopieur, par l'intermédiaire de la ligne de transmission, et à déterminer en conséquence les modalités du transfert d'informations.

Il est en outre souhaitable que le circuit comporte un coupleur monté sur la voie d'entrée et destiné à assurer le couplage à une ligne téléphonique du réseau commuté.

Ainsi, la mise en œuvre de l'invention ne nécessite aucune modification des terminaux des utilisateurs ni des lignes de transmission qui sont simplement formées par le réseau commuté. Un simple circuit de commutation et d'adaptation est monté à l'entrée de la banque d'informations.

D'autres caractéristiques et avantages de l'invention ressortiront mieux de la description qui va suivre, faite en référence aux dessins annexés sur lesquels :

la figure 1 est un diagramme synoptique d'une installation permettant la mise en œuvre du procédé d'échange, de chargement et de consultation d'informations selon l'invention ;

la figure 2 représente schématiquement un exemple de terminal réalisé de manière connue et utile pour la mise en œuvre de l'invention ;

la figure 3 est un diagramme synoptique d'un circuit de commutation et d'adaptation selon l'invention ; et

la figure 4 est un diagramme synoptique plus détaillé d'un mode de réalisation de circuit du type représenté sur la figure 3.

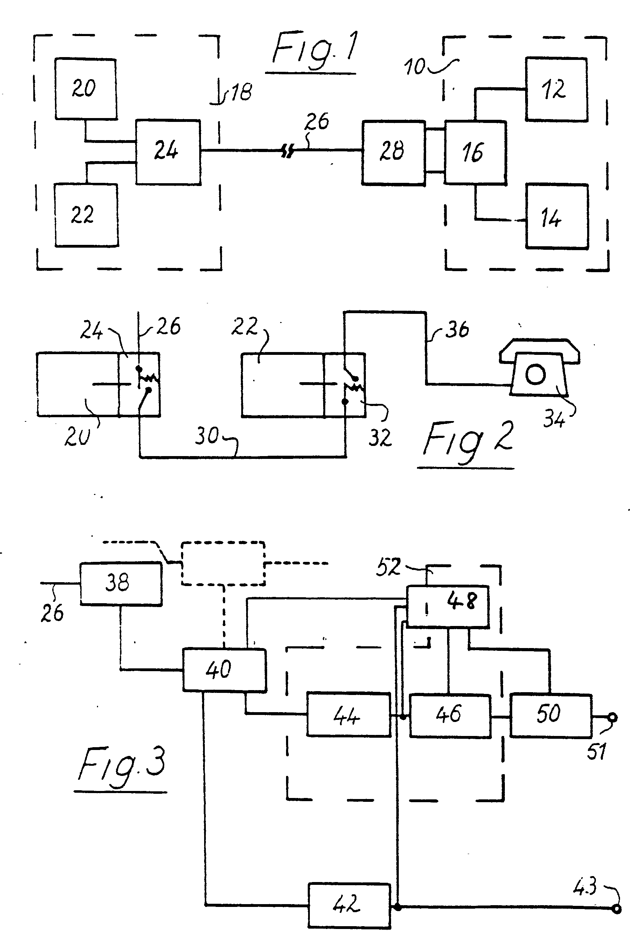

La figure 1 est un diagramme synoptique d'une installation utile pour la mise en œuvre de l'invention. Cette installation comporte une banque d'informations 10 ayant par exemple une base de données 12 et une banque de données 14 qui contiennent des données en formats différents, et un dispositif 16 de gestion, et notamment de commutation entre la base de données 12 et la banque de données 14 qui sont représentées.

Un terminal d'abonné 18 comporte un premier périphérique 20, par exemple un visuel, très avantageusement du type terminal-annuaire, et un second périphérique 22, avantageusement un télécopieur de groupe III, par exemple du type TC 103 de Matra, T 60 de Thomson CSF ou « Safax » 2000 de Sagem. Un dispositif 24 de commutation permet la connexion alternée du terminal 18 à une ligne 26 qui est avantageusement une ligne ordinaire d'abonné du réseau commuté.

Un circuit 28 de commutation et d'adaptation est raccordé d'une part à la ligne 26 du réseau commuté et d'autre part à la banque d'informations 10.

La banque d'informations 10 n'est pas d'un type actuellement utilisé, formé par simple juxtaposition de bases de données 12, 14. En fait, la constitution de la banque d'informations 10 est originale car la base de données 12 et la banque de données 14 contiennent des données ayant des formats différents, mais ces données présentent des relations. Plus précisément, certaines données de la banque 14 sont associées à d'autres données de la base 12. Le circuit 16 est destiné à rechercher dans la banque 14 les éléments d'information qui correspondent à des données qui viennent d'être consultées dans la base 12. Les circuits nécessaires à un tel fonctionnement sont bien connus des spécialistes et on ne les décrit pas en détail dans le présent mémoire.

Le terminal 18 est représenté sous une forme plus détaillée, dans un mode de réalisation, sur la figure 2. Les visuels constituant des « terminaux-annuaires », bien connus actuellement, comportent, en plus du visuel 20, un commutateur incorporé 24 qui permet la connexion de la ligne d'abonné 26 soit au visuel 20 soit à une ligne extérieure 30, la position de repos étant celle qui relie les lignes 26 et 30. Habituellement, cette ligne 30 est connectée à un combiné téléphonique tel que 34. Dans le terminal selon l'invention, cette ligne 30 est cependant connectée à un commutateur 32 d'un télécopieur 22, le commutateur étant normalement maintenu dans la position dans laquelle les fils 30 et 36 sont connectés. De cette manière, lorsque ni le visuel 20 ni le télécopieur 22 n'ont été commandés, le combiné téléphonique 34 est connecté à la ligne 26 d'abonné. Dans une variante, le combiné téléphonique peut être connecté directement à la ligne de transmission 26.

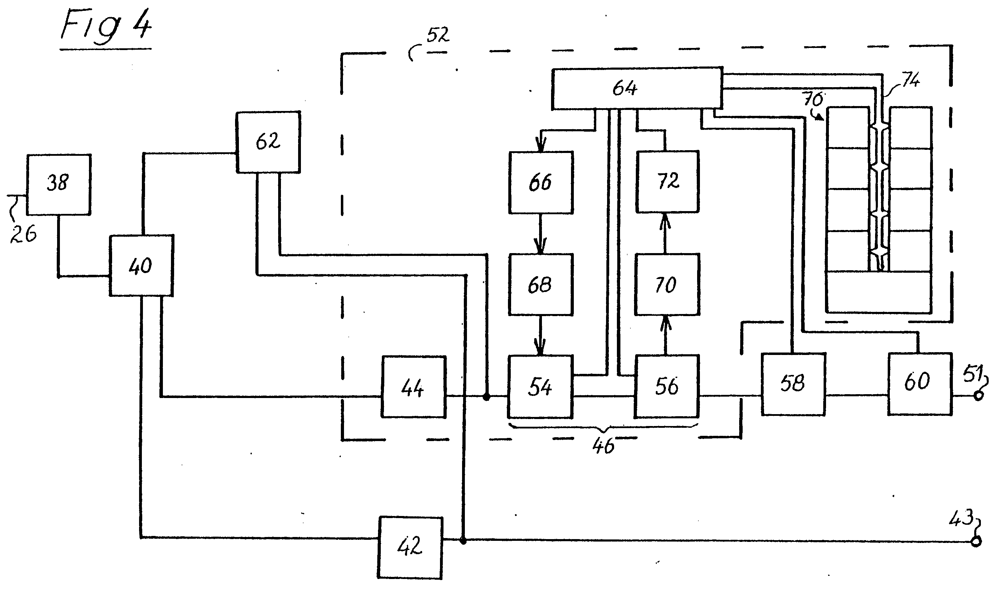

On considère maintenant plus en détail le circuit de commutation et d'adaptation 28 qui est représenté sous forme de diagramme synoptique sur la figure 3 et, de manière plus détaillée, sur la figure 4.

Le circuit de commutation et d'adaptation comporte d'abord un coupleur de ligne 38 destiné à assurer la connexion à une ligne ordinaire d'un réseau commuté public ou privé ou à une ligne spécialisée. Ce coupleur est relié à un commutateur 40. La ligne reliant le coupleur 38 au commutateur 40 constitue la voie d'entrée de celui-ci. Il a aussi deux voies de sortie dont la première est reliée à un premier modulateur-démodulateur 42 et la seconde à un second modulateur-démodulateur 44. La première voie de sortie aboutit à une connexion 43 destinée à être reliée à un accès de la banque d'informations, par exemple de la base de données 12.

La seconde voie de sortie comporte, en plus du modulateur-démodulateur 44, un commutateur 46 information/signalisation, relié à un circuit logique de commande 48, et un circuit 50 de traitement de caractères de contrôle ou d'un type particulier. Cette seconde voie aboutit à une connexion 51 destinée à être reliée à un autre accès de la banque d'informations, par exemple à la banque de données 14. Le modulateur-démodulateur 44, le commutateur 46 et le circuit logique 48 constituent un circuit 52 décrit plus en détail dans la suite du présent mémoire.

Dans le cas particulier considéré, la connexion 43 est reliée à un accès de la base de données et après passage dans le modulateur-démodulateur 42 de type convenable à la ligne 26 par l'intermédiaire du commutateur 40 et du coupleur 38. Dans le mode de réalisation considéré, le commutateur, lorsqu'il est en position de repos, est rappelé de manière qu'il assure la connexion du coupleur 38 au modulateur-démodulateur 42.

Le commutateur 40 est commandé par le circuit logique 48 qui lui indique quand il doit commuter. Lorsque le circuit 48 commande le commutateur afin qu'il connecte la seconde voie, des données codées peuvent être échangées entre la banque de données et le télécopieur par l'intermédiaire des circuits 44, 46 et 50.

On considère maintenant plus précisément le fonctionnement du circuit de la figure 3. Lorsqu'un abonné disposant du terminal représenté sur la figure 2 veut consulter les fichiers de la banque d'informations 10, il soulève le combiné et compose le numéro téléphonique de la banque d'informations. Les commutateurs 24 et 32 sont dans leur position de connexion directe du combiné à la ligne 26, et le réseau commuté assure la connexion au circuit 28, et plus précisément au coupleur 38 et au commutateur 40. Celui-ci est dans la position dans laquelle le coupleur 38 est relié au modulateur-démodulateur 42 si bien que, par l'intermédiaire de la connexion 43, le circuit 16 de gestion est connecté. Lorsqu'il reçoit une première tonalité, l'opérateur connecte le terminal-annuaire, sous forme du visuel 20, et l'abonné peut effectuer une véritable consultation de la base de données 12, par exemple par échange de données en format caractères. La base de données peut par exemple transmettre d'abord un menu sur lequel l'abonné effectue une sélection, si bien que la base de données 12 lui transmet des données en format caractères. A la fin du bloc de données transmis par la base de données 12, un signal de fin de message commande le circuit 16 de gestion qui provoque la commutation sur la banque de données 14 qui contient des données associées à celles qui ont été transmises sur le visuel 20, mais sous une autre forme. Par exemple, le visuel 20 a pu afficher une légende se rapportant à un dessin qui doit être transmis au télécopieur 22. Le circuit 16 de gestion, après avoir fait basculer la connexion de la base 12 à la banque 14, indique au circuit logique 48 les modalités du transfert d'informations sur le télécopieur 22 ou en provenance de celui-ci. Le circuit logique 48 adapte alors le circuit 52 (décrit plus en détail dans la suite du présent mémoire) en fonction des modalités du transfert des informations que peut transmettre ou recevoir la banque de données 14. Le circuit logique 48 provoque alors la commutation du commutateur 40 si bien que la seconde voie est connectée à la ligne 26. Le visuel 20 se déconnecte automatiquement de la ligne à la fin de la transmission si bien que l'abonné qui dispose du combiné 34 peut recevoir alors une seconde tonalité significative et peut donc commander la connexion du télécopieur 22. Le circuit 52 reçoit alors des signaux lui indiquant les modalités de transfert d'informations vers le télécopieur 22 ou en provenance de celui-ci, et il sélectionne un mode de fonctionnement permettant un échange convenable des données entre la banque 14 et le télécopieur 22. Le circuit 52 commande ensuite l'échange de données entre le télécopieur 22 et la banque de données 14 (dans un sens ou dans l'autre selon qu'il s'agit du chargement de la banque de données ou d'une consultation de celle-ci).

Il faut noter sur la figure 3 que le circuit 52 ne comporte qu'une partie du circuit logique 48. Cette caractéristique est expliquée dans la suite du présent mémoire en référence à la figure 4. Il faut en outre noter qu'un circuit représenté en pointillés indique la connexion d'un coupleur spécifique qui permet la commande du commutateur 40 par l'intermédiaire des signaux de la voie téléphonique, dans une variante d'appareil selon l'invention. La commande du commutateur par le circuit 48 n'est plus alors nécessaire.

On considère maintenant le circuit représenté plus en détail sur la figure 4. Les éléments portant les mêmes références que sur les figures précédentes ont la même signification. Ainsi, le coupleur, le commutateur et les modulateurs-démodulateurs ont le même rôle que précédemment. Par contre, la configuration du circuit 52 est détaillée. Le commutateur unique 46 de la figure 3 est représenté sous forme de deux commutateurs signalisation/information dont l'un est utilisé en émission et l'autre en réception. Le commutateur 54 utilisé en émission est relié à un circuit logique 64 de gestion et de contrôle par un circuit 66 générateur d'un polynôme de contrôle de trame, et un circuit 68 de constitution de trame. Le commutateur 56 utilisé en réception est relié au circuit logique 64 par un circuit 70 d'analyse et de contrôle de trame et par un circuit 72 de contrôle de validité de la trame. Des lignes 74 relient en outre le circuit 64 à des circuits 76 qui assurent la création et l'analyse du champ d'adresse, la création et l'analyse du champ de commande, la création et l'analyse du champ d'informations et la création et l'analyse du champ de commande en fac-similé ainsi que des tests de correspondance et de conformité.

L'ensemble des éléments du circuit 52 représenté sur la figure 4 peut être constitué par un circuit à microprocesseur, déjà développé comme élément des télécopieurs de groupe III, tels que le télécopieur 22.

Les circuits 58 et 60 correspondent au circuit 50 de la figure 3. Le circuit 58 est destiné à identifier et transformer des caractères spéciaux. Le circuit 60 est destiné à détecter et insérer des caractères de contrôle. Ces deux circuits sont adaptés spécialement à la banque d'informations et au mode d'interconnexion. En effet, selon le code mis en œuvre par la banque particulière d'informations, la transformation des caractères spéciaux peut varier. Certaines banques d'informations mettent en œuvre des ordinateurs qui ne prennent en compte que certains caractères du code ASCII. Il faut donc que les autres caractères soient transformés pour pouvoir être assimilés par la banque d'informations. De même, en sens inverse, lors de la restitution des informations, il faut que les caractères spéciaux correspondants soient incorporés.

Lorsque le circuit 52 est du type développé pour les télécopieurs de groupe III, il est peu commode de modifier le microprocesseur du circuit afin qu'il assure la commande du commutateur. Dans ce cas, il est préférable qu'un circuit spécial de commande 62 à microprocesseur assure la commande du commutateur 40. Ce circuit contrôle alors avantageusement les signaux des deux voies, à proximité des modulateurs-démodulateurs, afin qu'il détermine le moment convenable de commutation et contrôle le déroulement convenable des opérations.

L'appareil décrit précédemment ne nécessite aucune modification des lignes de transmission ni des terminaux qui sont à la disposition des abonnés. Seul le circuit de commutation et d'adaptation est incorporé entre les lignes téléphoniques et la banque d'informations qui est cependant d'un type original puisqu'elle comporte une banque de données et une base de données, ayant des formats différents et dans lesquelles des données en formats différents sont reliées. Il faut noter un avantage particulier de l'appareil décrit précédemment. Un abonné disposant d'un visuel et d'un télécopieur ne peut pas normalement recevoir d'épreuve des données présentées sur son visuel. En effet, il n'existe pas, dans le terminal de l'abonné, de système permettant la formation d'une épreuve sur le télécopieur à partir des informations de l'écran. Par contre, une telle installation peut être facilement montée au niveau central, c'est-à-dire au niveau de la banque d'informations. Dans ce cas, lorsqu'un abonné veut conserver une épreuve des informations présentées sur son écran, il peut le demander à la banque d'informations. Lorsque celle-ci contient déjà, dans la banque de données 14, des données ayant le format convenant au télécopieur, elle peut les transmettre directement. Par contre, si les informations correspondantes ne sont pas présentes dans la banque de données, la banque d'informations peut facilement former les données nécessaires par transformation des données de la base 12. Bien entendu, un appareil spécial est nécessaire à cet effet, mais un seul appareil permet le service d'un grand nombre d'abonnés et son coût n'est pas alors un obstacle important, de tels appareils étant connus de l'homme du métier.

Bien qu'on ait indiqué que le circuit 52 était formé par différents circuits, la plus grande partie des fonctions de ceux-ci peut être remplie par un microprocesseur et des composants associés tels que mémoire vive, mémoire passive, etc.

Bien qu'on ait décrit un mode de réalisation dans lequel le commutateur 40 était commandé par un circuit électrique spécifique, il peut aussi être commandé par des tonalités circulant dans la ligne téléphonique et captées par un coupleur spécifique, comme suggéré par le circuit indiqué en pointillés sur la figure 3. Bien entendu, les différents éléments sont d'un type bien connu adapté aux spécifications fixées par le pays utilisateur. Par exemple, il existe des normes concernant la transmission de données en format caractères, la transmission de données de télécopieur, etc. En particulier, les modulateurs-démodulateurs 42 et 44 sont adaptés aux vitesses des différents signaux. De même, les circuits 58 et 60 qui forment ensemble un transcodeur, sont adaptés à la nature particulière de la banque d'informations. Toutes ces adaptations sont bien connues des hommes du métier et on ne les décrit donc pas dans le présent mémoire.

## Revendications

1. Procédé d'échange, de chargement et de consultation d'informations entre un terminal (18) comprenant au moins deux périphériques (20, 22) fonctionnant avec des formats différents, et une banque d'informations (10) ayant au moins une base de données (12) et une banque de données (14) travaillant avec au moins deux formats différents, des données de la base étant associées à des données de la banque en formats différents, ledit procédé étant caractérisé en ce qu'il comprend :

l'établissement d'une communication entre le terminal (18) et la banque d'informations (10) par une seule ligne de transmission (26), par connexion d'un premier périphérique (20) à la base de données (12) ou à la banque de données, les données contenues dans cette base (12) ou cette banque ayant un premier format,

l'échange de données entre cette base (12) ou cette banque et le premier périphérique (20),

la connexion de la banque (14) ou de la base de données respectivement à la ligne de transmission (26) à la place de la base (12) ou de la banque de données respectivement, la banque (14) ou la base de données respectivement contenant des données ayant un second format différent du premier,

la connexion d'un second périphérique (22) à la ligne de transmission (26), à la place du premier périphérique (20), le second périphérique (22) étant destiné à échanger des données ayant le second format,

l'adaptation des modalités d'échange de données ayant le second format entre la banque (14) ou la base de données respectivement et le second périphérique (22),

l'échange de données entre la banque (14) ou la base de données respectivement et le second périphérique (22), et

la libération de la ligne de transmission de données (26).

2. Procédé selon la revendication 1, caractérisé en ce que la base de données (12) est connectée d'abord au premier périphérique (20) et l'échange entre la base de données (12) et le premier périphérique (20) comprend la transmission d'un menu par la base de données (12).

3. Procédé selon l'une des revendications 1 et 2, caractérisé en ce que la connexion de la banque (14) ou de la base de données à la place de la base (12) ou de la banque de données est de préférence effectuée automatiquement par la banque d'informations (10) à la fin de l'échange de données entre la base (12) ou la banque de données et le premier périphérique (20).

4. Procédé selon l'une quelconque des revendications 1 à 3, caractérisé en ce que le premier périphérique (20) est un visuel, et le second périphérique (22) est d'un type formant une épreuve.

5. Procédé selon l'une quelconque des revendications 1 à 4, caractérisé en ce que l'établissement de la communication est exécuté par un opérateur.

6. Procédé selon la revendication 5, caractérisé en ce que la connexion du second périphérique (22) à la place du premier (20) après que la banque d'informations (10) a basculé de la base (12) ou de la banque de données à la banque (14) ou à la base de données respectivement est exécutée par un opérateur.

7. Procédé selon l'une quelconque des revendications 1 à 6, caractérisé en ce qu'il comprend en outre le contrôle de l'établissement de la communication, puis l'exécution de la connexion de la banque (14) ou de la base de données à la place de la base (12) ou de la banque de données respectivement, le contrôle étant effectué par un opérateur.

8. Circuit de commutation et d'adaptation (28) destiné à être associé à une banque d'informations (10) comprenant au moins une base de données (12) et une banque de données (14) ayant des formats différents, ledit circuit étant caractérisé en ce qu'il comprend :

un commutateur (40) ayant une voie d'entrée et au moins deux voies de sortie, le commutateur étant rappelé dans la position dans laquelle la voie d'entrée est connectée à une première voie de sortie lorsqu'il est à l'état de repos,

un organe (62) de commande du commutateur, et

un circuit (52) d'adaptation des modalités d'échange de données, monté dans une seconde voie de sortie,

la voie d'entrée étant destinée à être reliée à une ligne unique de transmission (26), et les voies de sortie étant destinées à être reliées à des accès différents de la banque d'informations (10), les données transmises par les accès à la banque d'informations ayant des formats différents.

9. Circuit selon la revendication 8, caractérisé en ce que la première voie de sortie comporte un modulateur-démodulateur (42), et l'organe (62) de commande du commutateur est commandé par des signaux transmis par l'une des voies de sortie.

10. Circuit selon l'une des revendications 8 et 9, caractérisé en ce que le circuit d'adaptation (52) comporte un modulateur-démodulateur (44), et un circuit (64) destiné à dialoguer avec un périphérique à distance par l'intermédiaire de la ligne de transmission (26) et à déterminer en conséquence les modalités du transfert d'informations.

**Claims**

1. Process for interchanging, loading and consulting information between a terminal (18) comprising at least two peripherals (20, 22) operating with different formats and an information bank (10) having at least one data base (12) and one data bank (14) operating with at least two different formats, data from the base being associated with data from the bank in different formats, said process being characterized by including :

setting up a communication between the terminal (18) and the information bank (10) by a single transmission line (26), by connecting a first peripheral (20) to the data base (12) or to the data bank, the data contained in this base (12) or this bank being of a first format,

interchanging data between this base (12) or this bank and the first peripheral (20),

connecting the data bank (14) or the data base, respectively, to the transmission line (26) in lieu of the date base (12) or the data bank, the data bank (14) or the data base, respectively, containing data with a second format different from the first,

connecting a second peripheral (22) to the transmission line (26) in lieu of the first peripheral (20), the second peripheral (22) being for the purpose of interchanging data of the second format,

matching the interchange mode of the data in the second format between the respective data bank (14) or data base and the second peripheral (22),

interchanging the data between the respective data bank (14) or the data base and the second peripheral (22), and

releasing the data transmission line (26).

2. Process according to claim 1, characterized in that the data base (12) is connected first to the first peripheral (20) and the interchange between the data base (12) and the first peripheral (20) includes transmitting a menu by the data base (12).

3. Process according to one of claims 1 and 2, characterized in that the connection of the data bank (14) or the data base in lieu of the data base (12) or the data bank preferably is performed automatically by the information bank (10) at the end of the data exchange between the data base (12) or the data bank and the first peripheral (20).

4. Process according to any one of the claims 1 through 3, characterized in that the first peripheral (20) is a display unit and the second peripheral (22) is of the kind forming a print.

5. Process according to any one of the claims 1 through 4, characterized by an operator setting up the communication.

6. Process according to claim 5, characterized in that the connection of the second peripheral (22) in lieu of the first (20) after the information bank (10) has flipped from the data base (12) or the data bank to the data bank (14) or the data base, respectively, is performed by an operator.

7. Process according to any one of the claims 1 through 6, characterized by furthermore comprising monitoring the set-up of the communication, then connecting the data bank (14) or the data base in lieu of the data base (12) or the data bank, respectively, monitoring being performed by an operator.

8. Switching and matching circuit (28) to be associated with an information bank (10) comprising at least one data base (12) and one data bank (14) with different formats, said circuit being characterized by comprising :

a switch (40) with one input channel and at least two output channels, the switch being stressed toward that position wherein the input channel is connected to a first output channel when it is in the rest position,

a control means (62) for the switch, and

a circuit (52) for matching data interchange modes and mounted in the second output channel,

wherein the input channel is to be connected to a single transmission line (26) and the output channels are to be connected to different accesses of the information bank (10), the data transmitted by the accesses to the information bank being in different formats.

9. Circuit according to claim 8, characterized in that the first output channel includes a modem (42) and in that the control means (62) for the switch is actuated by signals transmitted by one of the output channels.

10. Circuit according to one of claims 8 and 9, characterized in that the matching circuit (52) includes a modem (44) and a circuit (64) for dialogue with a remote peripheral by means of the transmission line (26) and for consequently determining the information transfer modes.

**Patentansprüche**

1. Verfahren zum Austausch, zum Laden und zur Beratung von Informationen zwischen einem Terminal (18), der wenigstens zwei mit unterschiedlichen Formaten arbeitende Peripheriegeräte (20, 22) enthält, und einer Informationsbank (10) mit wenigstens einer Datenbasis (12) und einer Datenbank (14), die mit wenigstens zwei unterschiedlichen Formaten arbeiten, wobei die Daten der Basis und die Daten der Bank in den unterschiedlichen Formaten zusammengefaßt werden, gekennzeichnet durch

die Errichtung einer Übertragung zwischen dem Terminal (18) und der Informationsbank (10) durch eine einzige Übertragungsleitung (26) bei einer Verbindung eines ersten Peripheriegerätes (20) mit der Datenbasis (12) oder mit der Datenbank, wobei die in dieser Basis (12) oder in dieser Bank enthaltenen Daten ein erstes Format besitzen,

den Datenaustausch zwischen dieser Basis (12) oder dieser Bank und dem ersten Peripheriegerät (20),

die Verbindung der Datenbank (14) oder der Datenbasis in entsprechender Weise durch die Übertragungsleitung (26) mit dem Platz der Datenbasis (12) bzw. der Datenbank, wobei die Datenbank (14) oder die Datenbasis in entsprechender Weise Daten enthält, die ein sich vom ersten Format unterscheidendes zweites Format besitzen,

die Verbindung eines zweiten Peripheriegerätes (22) durch die Übertragungsleitung (26) mit dem Platz des ersten Peripheriegerätes (20), wobei das zweite Peripheriegerät (22) dazu bestimmt ist, Daten des zweiten Formats auszutauschen,

die Anpassung von Austauschmodalitäten der Daten des zweiten Formats zwischen der Datenbank (14) bzw. der Datenbasis und dem zweiten Peripheriegerät (22),

den Datenaustausch zwischen der Datenbank (14) bzw. der Datenbasis und dem zweiten Peripheriegerät (22)

und Freigabe der Datenübertragungsleitung (26).

2. Verfahren nach Anspruch 1, dadurch gekennzeichnet, daß die Datenbasis (12) zunächst mit dem ersten Peripheriegerät (20) verbunden wird und der Austausch zwischen der Datenbasis (12) und dem ersten Peripheriegerät (20) die Übertragung eines Menüs durch die Datenbasis (12) enthält.

3. Verfahren nach einem der Ansprüche 1 und 2, dadurch gekennzeichnet, daß die Verbindung der Datenbank (14) oder der Datenbasis mit dem Platz der Datenbasis (12) oder der Datenbank vorzugsweise durch die Informationsbank (10) am Ende des Datenaustauschs zwischen der Datenbasis (12) oder der Datenbank und dem ersten Peripheriegerät (20) automatisch durchgeführt wird.

4. Verfahren nach einem der Ansprüche 1-3, dadurch gekennzeichnet, daß das erste Peripheriegerät (20) ein visuelles und das zweite Peripheriegerät (22) eines Typs ist, der einen Abzug bildet.

5. Verfahren nach einem der Ansprüche 1-4, dadurch gekennzeichnet, daß die Errichtung der Übertragung durch einen Operator ausgeführt wird.

6. Verfahren nach Anspruch 5, dadurch gekennzeichnet, daß die Verbindung des zweiten Peripheriegerätes (22) mit dem Platz des ersten (20) durch einen Operator hergestellt wird, nachdem die Informationsbank (10) von der Datenbasis (12) oder der Datenbank auf die Datenbank (14) bzw. die Datenbasis entsprechend umgeschwenkt hat.

7. Verfahren nach einem der Ansprüche 1-6, dadurch gekennzeichnet, daß es außerdem die Kontrolle zur Errichtung der Übertragung und dann die Ausführung der Verbindung von der Datenbank (14) oder der Datenbasis zum Platz der Datenbasis (12) bzw. der Datenbank enthält, wobei die Kontrolle durch einen Operator ausgeführt wird.

8. Schaltungs- und Anpassungskreis (28) für eine Verbindung mit einer Informationsbank (10), die wenigstens eine Datenbasis (12) und eine Datenbank (14) mit unterschiedlichen Formaten enthält, gekennzeichnet durch

einen Umschalter (40), der einen Eingangsweg und wenigstens zwei Ausgangswege aufweist und der in die Position, in der der Eingangsweg mit einem ersten Ausgangsweg verbunden ist, zurückstellbar ist, wenn er sich im Ruhezustand befindet,

ein Organ (62) zum Betätigen des Umschalters und

eine Schaltung (52) zur Anpassung der Datenaustauschmodalitäten, die in einem zweiten Ausgangsweg angeordnet ist, wobei

der Eingangsweg dazu bestimmt ist, mit einer einzigen Übertragungsleitung (26) verbunden zu werden, wobei die Ausgangswege dazu bestimmt sind, mit unterschiedlichen Zugängen der Informationsbank (10) verbunden zu werden und wobei die durch die Zugänge an die Informationsbank übertragenen Daten unterschiedliche Formate besitzen.

9. Schaltung nach Anspruch 8, dadurch gekennzeichnet, daß der erste Ausgangsweg einen Modulator-Demodulator (42) enthält und das Betätigungsorgan (62) des Umschalters durch Signale betätigt wird, die durch einen der Ausgangswege übertragen werden.

10. Schaltung nach einem der Ansprüche 8 und 9, dadurch gekennzeichnet, daß die Anpassungsschaltung (52) einen Modulator-Demodulator (44) und eine Schaltung (64) enthält, die dazu bestimmt ist, mit einem Peripheriegerät durch Zwischenschaltung einer Übertragungsleitung auf Distanz einen Dialog zu führen und dementsprechend die Übertragungsmodalitäten von Informationen zu bestimmen.

Fig.1

Fig 2

Fig.3

Fig 4

EP 0 098 200 B1